# EUROPÄISCHE PATENTSCHRIFT

(11) **EP 1 339 591 B1**
(45) Veröffentlichungstag und Bekanntmachung des Hinweises auf die Patenterteilung: **28.07.2004**
(21) Anmeldenummer: 01998468.1
(22) Anmeldetag: 23.10.2001
(51) Int. Cl.: B60T 17/02, B61C 17/00

(54) **ANORDNUNG EINES TROCKENLAUFENDEN KOMPRESSORS AN EINEM FAHRZEUG**
STRUCTURE OF AN OIL-FREE COMPRESSOR ON A VEHICLE
AGENCEMENT D'UN COMPRESSEUR A PISTON SEC SUR UN VEHICULE

(30) Priorität: 28.11.2000 DE 10058923
(43) Veröffentlichungstag der Anmeldung: 03.09.2003
(73) Patentinhaber: KNORR-BREMSE Systeme für Schienenfahrzeuge GmbH, 80809 München (DE)
(72) Erfinder: HARTL, Michael, 82008 Unterhaching (DE); MEYER, Frank, 78333 Stockach-Wahlwies (DE)
(74) Vertreter: Kietzmann, Lutz
(86) Internationale Anmeldenummer: PCT/EP2001/012234
(87) Internationale Veröffentlichungsnummer: WO 2002/044003

(56) Entgegenhaltungen:
- WO-A-00/38967
- US-A- 3 918 850
- US-A- 4 696 626
- US-A- 4 784 585

## Beschreibung

Die Erfindung betrifft eine Anordnung eines trockenlaufenden Kompressors an einem Fahrzeug, insbesondere an einem Schienenfahrzeug, zur Druckluftbeschaffung für dem Fahrzeug zugeordnete diverse Druckluftaggregate Aus der US-4,784,585 ist ein Kompressor bekannt der den Stand der Technik gemäß dem ersten Teil des Anspruchs 1 entspricht.

Gewöhnlich ist bei einem Schienenfahrzeug eine Druckluftanlage vorgesehen, worüber vorwiegend die Bremsen des Schienenfahrzeuges als wesentliche Druckluftaggregate betätigt werden. Zur Druckluftbeschaffung dient hierbei ein Kompressor, der meist außen am Schienenfahrzeug und im Bereich des Fahrzeugbodens der Länge nach horizontal hängend oder stehend angeordnet ist. Der Kompressor besteht aus einer eine Drehbewegung erzeugenden Antriebseinheit, die meist als Elektromotor ausgebildet ist, und einer Verdichtereinheit, welche im wesentlichen aus mehreren an einem Gehäuse für eine Kurbelwelle angeordnete topfartige Zylinder für innenliegende Kolben besteht, wobei die über die Antriebseinheit angetriebene Kurbelwelle ihre Drehbewegung über je ein Pleuel in eine lineare Bewegung für jeden zugeordneten Kolben zum Komprimieren von angesaugter Luft umwandelt. Neben dieser als Kolbenverdichter ausgeführten Verdichtereinheit sind auch Schraubenverdichter allgemein bekannt, die ebenfalls in den Rahmen der vorliegenden Erfindung eingeschlossen sind. Gattungsgemäße Verdichtereinheiten können darüber hinaus auch ein- oder mehrstufig mit mindestens einer Niederdruckstufe und Hochdruckstufe ausgeführt sein.

Die im Fahrzeugbereich zum Einsatz kommenden Kompressoren sind gewöhnlich einem langen Dauerbetrieb oder einem häufigen Ein- und Ausschalten ausgesetzt, was reibungsbedingt zu einer hohen Wärmeentwicklung führt. Im Fahrzeugbereich wurden in der Vergangenheit daher vornehmlich Kompressoren verwendet, die aufgrund einer Ölschmierung eine ausreichende Kühlwirkung sicherstellen. Bei der Ölschmierung besteht jedoch andererseits die Gefahr, dass das im Gehäuse der Verdichtereinheit befindliche Schmieröl im Falle eines Kolbenverdichters über die Kolben-Zylinder-Paarung in das Druckluftanlage eindringt, was zur Verölung von druckluftbetriebenen Bremsgeräten am Fahrzeug führen kann. Ferner muss das Kondensat, welches bei der erforderlichen Lufttrocknung des Druckluftsystems anfällt, wegen seines Ölgehalts aus Umweltschutzgründen in beheizbaren Behältern gesammelt und in regelmäßigen Zeitabständen abgelassen und entsorgt werden. Dies führt zu einem erhöhtem Wartungs- und Entsorgungsaufwand sowie zu einem hohen Ölverbrauch. Hinzu kommen bei niedriger Einschaltdauer im Winterbetrieb häufig auftretende Schwierigkeiten mit Emulsionsbildungen im Ölkreislauf dieser ölgeschmierten Verdichtereinheiten.

In jüngster Zeit werden daher zunehmend trockenlaufende Kompressoren zum Einsatz gebracht. Ein trockenlaufender Kompressor arbeitet in seiner Verdichtereinheit ohne ein im Gehäuse befindliches Schmieröl, d.h. ölfrei. Statt dessen wird die Schmierung im Falle eines Kolbenverdichters an der Kolbenlaufbahn durch eine besonders reibungsarme dynamische Dichtungsanordnung ersetzt. Alle drehenden Bauteile sind üblicherweise wälzgelagert. Die gekapselten Wälzlager werden dabei mit einer temperaturbeständigen langlebigen Fettfüllung versehen. Im Ventilbereich werden gleitgeführte Bauteile weitestgehend vermieden. Durch diese Maßnahmen ist eine Ölschmierung in der Verdichtereinheit entbehrlich. Folglich kann die Gefahr einer Verölung der erzeugten Druckluft ausgeschlossen werden. Durch den Wegfall eines Ölkreislaufs kann der trockenlaufende Kompressor darüber hinaus relativ leichtbauend ausgeführt werden.

Durch den im Fahrzeugbereich zunehmenden Leichtbautrend kommen auch für Rahmenkonstruktionen vermehrt leichte Trägerstrukturen zur Anwendung, die jedoch häufig eine Anzahl von ungünstigen Eigenfrequenzen aufweisen, welche nahe der Drehzahl des daran angeordneten Kompressors der Druckluftanlage liegen. Daher ist es hierbei sehr problematisch, die geforderten Spezifikationen über zulässige Körperschallpegel hinreichend einzuhalten.

Es ist die Aufgabe der vorliegenden Erfindung, die Anordnung eines trockenlaufenden Kompressor an einem Fahrzeug derart zu verbessern, dass der den durch den Betrieb des Kompressors erzeugte Körperschallpegel minimal ist.

Die Aufgabe wird ausgehend von einem Kolbenkompressor gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Hauptdrehachse des Kompressors im wesentlichen vertikal zum Fahrzeugboden anzuordnen ist, wobei der Kompressor zumindest stirnseitig mit dem Fahrzeugboden befestigt ist.

Der Vorteil der erfindungsgemäßen Lösung liegt vor allem darin, dass hierdurch in einfacher Weise eine besonders schwingungsarme Anordnung des Kompressors am Fahrzeug erreicht wird. Diverse Versuche haben ergeben, dass eine bezüglich des Fahrzeugbodens im wesentlichen senkrechte - d.h. im Bereich von 0° bis 10° zur Senkrechten angeordnete - Drehachse des Kompressors keine spürbaren Schwingungspegel am Fahrzeugboden mehr erzeugt. Diese Erscheinung lässt sich dadurch erklären, dass in Richtung der Drehachse des Kompressors keine Kräfte und Momente wirken. Diese wirken in starkem Maße jedoch senkrecht zur Drehachse und damit parallel zum Fahrzeugboden. Parallel zum Fahrzeugboden wirkende Kräfte und Momente erzeugen hierin wiederum keine spürbaren Schwingungspegel, da sich der Fahrzeugboden gegenüber einer derartigen Schub-Wechselbeanspruchung starr verhält. Eine zum Fahrzeugboden vertikale Drehachse des Kompressors ist gleichwohl nur mit einem trockenlaufenden Kompressor realisierbar, da bei einem ölgeschmierten Kompressor eine horizontale Anordnung aus konstruktiven Gründen zwingend ist, um eine ausreichende Schmierung und insoweit hinreichende Standfestigkeit zu erzielen. Bei Verwendung eines Kompressors mit Kolbenverdichter kann der trockenlaufende Kompressor erfindungsgemäß in einer solchen Ebene mit dem Fahrzeugboden verbunden werden, in der weder Massenkräfte und Momente, noch Gaskräfte senkrecht zum Fahrzeugboden wirken. So kann beispielsweise bei Lokeinbauten oder Triebzugeinbauten verhindert werden, dass am Fahrersitz vom Kompressor herrührende Schwingungen unangenehm wahrgenommen werden.

Vorzugsweise ist der Kompressor stehend auf dem Fahrzeugboden im Inneren des Fahrzeuges angeordnet und weist benachbart zum Fahrzeugboden stirnseitig eine Kühlereinheit auf, die über mindestens einen nach außen führenden Durchbruch im Fahrzeugboden Luft zum Kühlen des Kompressors ansaugt. Durch diese spezielle Anordnung im Inneren des Fahrzeuges wird wenig Bodenfläche des Fahrzeuges in Anspruch genommen, was eine erhebliche Platzeinsparung der knappen Bodenfläche ermöglicht. Weiterhin ist der Kompressor hierdurch geschützt untergebracht, wobei durch den Durchbruch und der benachbarten Kühlereinheit gleichzeitig für ausreichend Kühlung gesorgt ist. Die im Luftstrom eines Propellers, der von der Drehachse des Kompressors angetrieben wird, angeordnete Kühlereinheit sorgt für eine Abkühlung der vom Kompressor erzeugten Druckluft, ehe diese der Druckluftanlage zur Verfügung gestellt wird. Gleichzeitig wird auch der Kompressor selbst durch den Luftstrom über seine Oberfläche gekühlt.

Gemäß einer die Kühlwirkung verbessernden Maßnahme kann der Luftstrom zum Kühlen des Kompressors durch die Sogwirkung einer oberhalb des Kompressors angeordneten Abzugseinrichtung zusätzlich verstärkt werden, so dass die Luft kaminartig am Kompressor zur Kühlung entlangströmt.

Die Befestigung des Kompressors am Fahrzeugboden erfolgt vorzugsweise über elastische Lagerelemente. Hierdurch wird eine zusätzliche Schwingungsentkopplung zwischen dem Fahrzeugboden und dem Kompressor erzielt. Als elastisches Lagerelement eignet sich beispielsweise ein Drahtseilfederelement oder ein Gummielement. Die elastischen Lagerelemente können zum einen zwischen dem Gehäuse des Kompressors selbst und dem Fahrzeugboden angeordnet werden. Zum anderen ist es auch denkbar, die elastischen Lagerelemente zwischen der stirnseitigen Kühlereinheit des Kompressors und dem Fahrzeugboden anzuordnen. Zusätzlich zu den dem Fahrzeugboden zugeordneten elastischen Lagerelementen können noch weitere Befestigungselemente vorgesehen werden, die seitlich zwischen dem Kompressor und der Fahrzeugwand platziert sind. Anstelle der Fahrzeugwand kann auch mindestens ein vertikaler Befestigungsträger zur seitlich abstützenden Befestigung des Kompressors verwendet werden. Die hier verwendeten Befestigungselemente sind vorzugsweise ebenfalls als elastische Lagerelemente ausgeführt.

Um bei der stehenden Anordnung des Kompressors innerhalb des Fahrzeuges turnusgemäß erforderliche Wartungsarbeiten von der Seite her bequem ohne eine Demontage des kompletten Kompressors durchführen zu können, sind die Wartungskomponenten des Kompressors - wie Luftfilter, Verdichtergehäusedeckel und Klemmkasten für den elektrischen Anschluss der Antriebseinheit - vorteilhafter Weise seitlich gut zugänglich ausgestaltet.

Wie vorstehend bereits beschrieben, besteht der Kompressor im wesentlichen aus einer Antriebseinheit sowie einer nach Art eines Kolbenverdichters oder eines Schraubenverdichters ausgeführten Verdichtereinheit. Die Drehachse der Antriebseinheit verläuft hierbei vorzugsweise parallel oder koaxial zur Drehachse der Verdichtereinheit, um insoweit die Hauptdrehachse des Kompressors zu bilden.

Weitere die Erfindung verbessernde Maßnahmen sind in den abhängigen Ansprüchen angegeben oder werden nachfolgend gemeinsam mit der Beschreibung eines bevorzugten Ausführungsbeispiels der Erfindung anhand der Figuren näher dargestellt. Es zeigt:
- Figur 1: eine perspektivische Außenansicht eines mit einem mehrstufigen Kolbenverdichter ausgestatteten trockenlaufenden Kompressors in der erfindungsgemäßen Einbauposition, und
- Figur 2: eine Seitenansicht des Kompressors nach Figur 1 im eingebauten Zustand in einem Schienenfahrzeug.

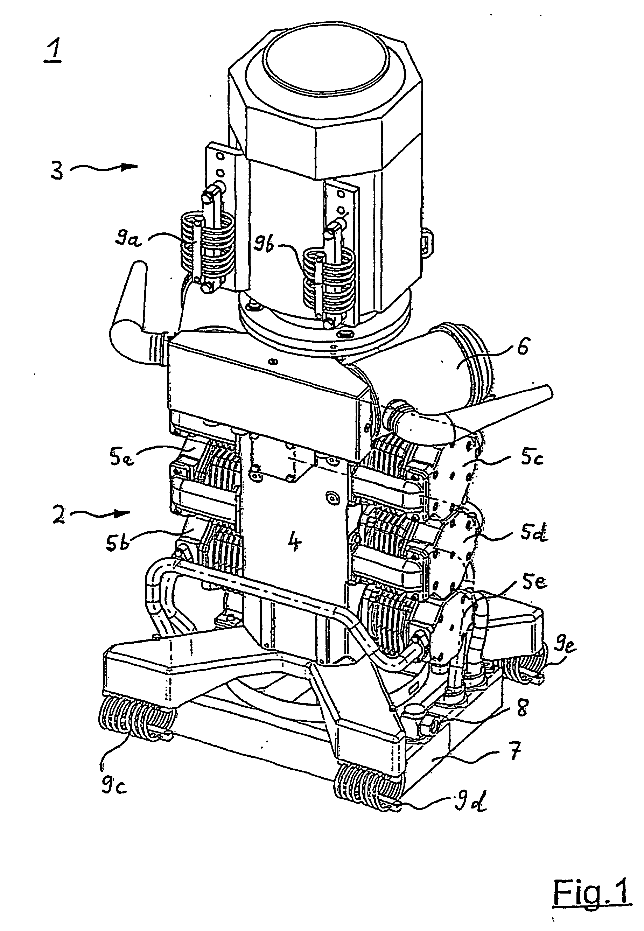

Der trockenlaufende Kompressor 1 nach Figur 1 besteht im wesentlichen aus einer Verdichtereinheit 2 mit koaxial angeflanschter Antriebseinheit 3. Die Antriebseinheit 3 ist als Elektromotor ausgeführt und ist am Gehäuse 4 der Verdichtereinheit 2 über eine Schraubverbindung lösbar befestigt. Die Antriebseinheit 3 versetzt eine im Gehäuse 4 angeordnete - hier nicht sichtbare - Kurbelwelle in eine Drehbewegung, welche in eine Hubbewegung für Kolben umgesetzt wird, die innerhalb der am Gehäuse 4 befestigten topfartigen Zylinder 5a bis 5e zur Drucklufterzeugung untergebracht sind. Durch die Kolbenbewegung wird aus der Atmosphäre Luft über einen eingangsseitigen Luftfilter 6 angesaugt und verdichtet. Die so erzeugte Druckluft passiert eine Kühlereinheit 7 mit Propeller und steht danach der Druckluftanlage eines Fahrzeuges über den Anschluss 8 zur Verfügung. In diesem Ausführungsbeispiel ist die Verdichtereinheit 2 als mehrstufiger Kolbenverdichter mit Niederdruckstufe und Hochdruckstufe ausgeführt. Der Niederdruckstufe sind hier die Zylinder 5a, 5c, 5d zugeordnet; zur Hochdruckstufe gehören die Zylinder 5b und 5e. Die Zylinder 5a bis 5e sind am Gehäuse 4 der Verdichtereinheit 2 gegenüberliegend angeordnet. Zur Befestigung der Verdichtereinheit 2 mit angeflanschter Antriebseinheit 3 an einem Fahrzeug sind insgesamt sechs elastische Lagerelemente - von denen hier lediglich die Lagerelemente 9a bis 9e erkennbar sind -vorgesehen.

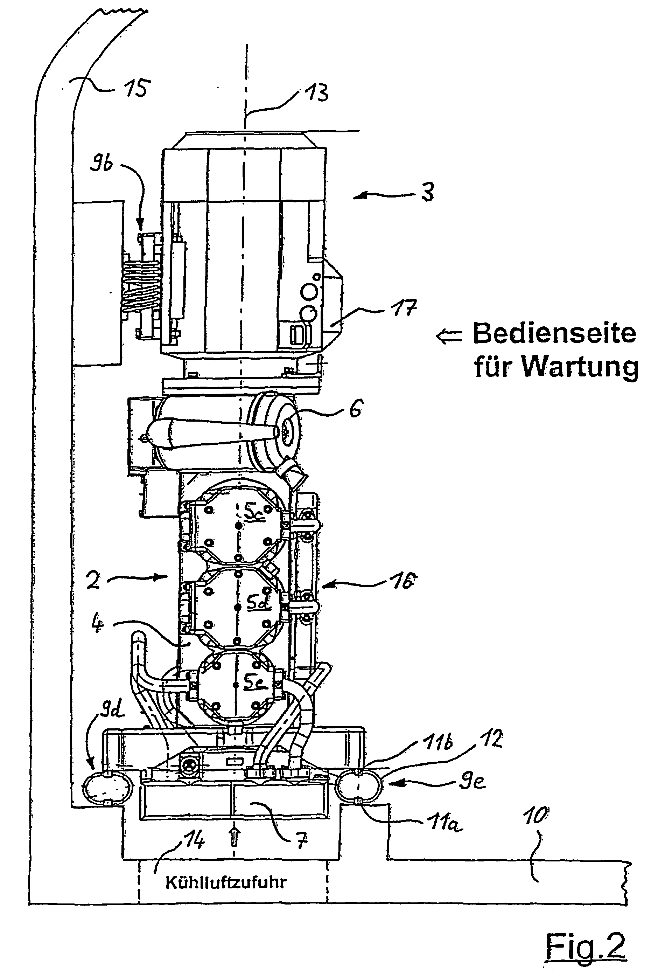

Gemäß Figur 2 erfolgt die Befestigung des Kompressors 1 stehend auf einem Fahrzeugboden 10, so dass die Hauptdrehachse 13 des Kompressors 1 genau vertikal zum Fahrzeugboden 10 angeordnet ist. Jedes Lagerelement 9 besteht aus zwei Befestigungsteilen 11a und 11b, wovon ein Befestigungsteil 11a dem Fahrzeugboden 10 zugeordnet ist, wogegen das gegenüberliegend angeordnete andere Befestigungsteil 11b kompressorseitig an der Kühlereinheit 7 über eine Schraubverbindung befestigt ist. Die zwischen beiden Befestigungsteilen 11a und 11b angeordnete Drahtseilfeder 12 besteht aus mehreren schraubenlinienförmig verlaufenden Windungen. Hierüber ist es möglich, die Verdichtereinheit 2 samt Antriebseinheit 3 zusätzlich schwingungsgedämmt mit dem Fahrzeugboden 10 zu verbinden. Damit bereits die Verdichtereinheit 2 möglichst wenig Schwingungen erzeugt, arbeiten ihre Kolben hier nach Art eines Boxers, wobei hinsichtlich der bewegten Massen ein dynamischer Ausgleich erfolgt. Ausreichend Luft zum Kühlen der Kühlereinheit 7 wird über einen nach außen führenden Durchbruch 14 im Fahrzeugboden 10 angesaugt.

Zusätzlich zu den dem Fahrzeugboden 10 zugeordneten elastischen Lagerelementen 9d, 9e sind weitere Lagerelemente 9a, 9b vorgesehen, die seitlich zwischen dem Kompressor 1 und der Fahrzeugwand 15 angeordnet sind. Der Kompressor 1 ist so konstruiert, dass seine Wartungskomponenten seitlich gut zugänglich sind, um bei der stehenden Anordnung innerhalb des Fahrzeuges erforderliche Wartungsarbeiten von dieser Bedienseite her ohne eine komplette Demontage des Kompressors 1 durchführen zu können. Als derartige Wartungskomponenten kommen hier ein Gehäusedeckel 16 der Verdichtereinheit 2, der Luftfilter 6 und ein Klemmkasten 17 in Frage, über den der elektrische Anschluss der Antriebseinheit 3 erfolgt.

Die vorliegende Erfindung ist in ihrer Ausführung nicht beschränkt auf das vorstehend nur vorzugsweise angegebene Ausführungsbeispiel. Es sind vielmehr auch Abwandlungen hiervon denkbar, die trotz anderer Ausgestaltung in den Schutzbereich der durch die Ansprüche definierten Erfindung eingreifen. Die Erfindung ist weiterhin insbesondere nicht beschränkt auf eine Ausbildung der Verdichtereinheit als Kolbenverdichter. Die Vorteile der Erfindung ergeben sich auch bei einer anders gearteten Verdichtereinheit, die beispielsweise auch als Schraubenverdichter ausgebildet sein kann. Ferner ist es auch möglich, den Kompressor zumindest teilweise außerhalb des Fahrzeuges unterzubringen, sofern hierbei die im wesentlichen vertikale Ausrichtung der Hauptdrehachse zum Fahrzeugboden erhalten bleibt.

### Bezugszeichenliste

- **1**: Kompressor
- **2**: Verdichtereinheit
- **3**: Antriebseinheit
- **4**: Gehäuse
- **5**: Kolben
- **6**: Luftfilter
- **7**: Kühler
- **8**: Anschluss
- **9**: Lagerelement
- **10**: Fahrzeugboden
- **11**: Befestigungsteil
- **12**: Drahtseilfeder
- **13**: Hauptdrehachse
- **14**: Durchbruch
- **15**: Fahrzeugwand
- **16**: Gehäusedeckel
- **17**: Klemmkasten

## Patentansprüche

1. Anordnung eines trockenlaufenden Kompressors (1) an einem Fahrzeug, insbesondere an einem Schienenfahrzeug, zur Druckluftbeschaffung für dem Fahrzeug zugeordnete diverse Druckluftaggregate, wobei
die Hauptdrehachse (13) des Kompressors (1) im Wesentlichen vertikal zum Fahrzeugboden (10) angeordnet ist, woran der Kompressor (1) zumindest stirnseitig am Frahrzeugboden befestigt ist, wobei benachbart zum Fahrzeugboden (10) und ebenfalls stirnseitig eine Kühlereinheit (7) vorgesehen ist, **dadurch gekennzeichnet, dass** die über mindestens einen nach außen führenden Durchbruch (14) im Fahrzeugboden (10) zum Ansaugen von Kühlhuft zusammenwirkt.

2. Anordnung nach Anspruch 1,
**dadurch gekennzeichnet, dass** der Kompressor (1) stehend auf dem Fahmeugboden (10) im Inneren des Fahrzeuges angeordnet ist.

3. Anordnung nach Anspruch 1 oder 2,
**dadurch gekennzeichnet, dass** die Luft zum Kühlen der Kühlereinheit (7) durch die Sogwirkung einer oberhalb des Kompressors (1) angeordneten Abzugseinrichtung kaminartig am Kompressor (1) entlangströmt.

4. Anordnung nach Anspruch 1,
**dadurch gekennzeichnet, dass** die Befestigung des Kompressors (1) am Fahrzeugboden (10) über mehrere elastische Lagerelemente (9) erfolgt.

5. Anordnung nach Anspruch 4,
**dadurch gekennzeichnet, dass** die elastischen Lagerelemente (9) zwischen dem Gehäuse (4) der Verdichtereinheit (2) und dem Fahrzeugboden (10) angeordnet sind.

6. Anordnung nach Anspruch 4,
**dadurch gekennzeichnet, dass** die elastischen Lagerelemente (9) zwischen der Kühlereinheit (7) und dem Fahrzeugboden (10) angeordnet sind.

7. Anordnung nach Anspruch 4,
**dadurch gekennzeichnet, dass** zusätzlich zu den dem Fahrzeugboden (10) zugeordneten elastischen Lagerelementen (9c bis 9e) weitere Befestigungselemente (9a und 9b) vorgesehen sind, die seitlich zwischen dem Kompressor (1) und einer Fahrzeugwand (15) oder mindestens einem vertikalen Befestigungsträger angeordnet sind.

8. Anordnung nach einem der vorstehenden Ansprüche,
**dadurch gekennzeichnet, dass** der Kompressor (1) seitlich zugängliche Wartungskomponenten aufweist, um bei der stehenden Anordnung des Kompressors (1) innerhalb des Fahrzeuges erforderliche Wartungsarbeiten von der Seite her ohne eine Demontage des Kompressors (1) durchführen zu können.

9. Anordnung nach einem der vorstehenden Ansprüche,
**dadurch gekennzeichnet, dass** der Kompressor (1) im wesentlichen aus einer Antriebseinheit (3) sowie einer nach Art eines Kolbenverdichters oder eines Schraubenverdichters ausgeführten Verdichtereinheit (2) besteht, wobei die Drehachse der Antriebseinheit (3) parallel oder koaxial zur Drehachse der Verdichtereinheit (2) verläuft, um die Hauptdrehachse (13) des Kompressors (1) zu bilden.

10. Anordnung nach Anspruch 9,
**dadurch gekennzeichnet, dass** bei Ausführung der Verdichtereinheit (2) als Kolbenverdichter mehrere einzelne Zylinder (5a bis 5e) gegenüberliegend am Gehäuse (4) angeordnet sind, so dass sich die in den Zylindern (5a bis 5e) befindlichen Kolben in einer Ebene bewegen.

11. Anordnung nach einem der vorstehenden Ansprüche,
**dadurch gekennzeichnet, dass** die Befestigung des Kompressors (1) am Fahrzeugboden (10) über einen dazwischen angeordneten Befestigungsträger erfolgt.

## Claims

1. Structure of an oil-free compressor (1) on a vehicle, particularly on a rail vehicle, for compressed-air production for various pneumatic units associated with the vehicle, wherein the principal axis of rotation (13) of said compressor (1) is arranged in a position substantially vertical relative to the floor (10) of the vehicle, with said compressor (1) being fastened, at least on the face side, on said vehicle floor, and with a cooler unit (7) being provided adjacent to said vehicle floor and equally on the face side,
**characterised in that** said cooler unit (7) cooperates for the aspiration of cooling air via at least one breakthrough (14) in said vehicle floor (10), which leads to the outside.

2. Structure according to Claim 1,
**characterised in that** said compressor (1) is disposed in an upright position on said vehicle floor (10) inside the vehicle.

3. Structure according to Claim 1 or 2,
**characterised in that** due to the suction effect of a withdrawal device disposed above said compressor (1), the air for cooling of said cooler unit (7) flows along said compressor (1) in a manner of a chimney effect.

4. Structure according to Claim 1,
**characterised in that** said compressor (1) is fastened on said vehicle floor (10) via a plurality of resilient supporting elements (9).

5. Structure according to Claim 4,
**characterised in that** said resilient supporting elements (9) are disposed between the housing (4) of a compression unit (2) and said vehicle floor (10).

6. Structure according to Claim 4,
**characterised in that** said resilient supporting elements (9) are disposed between said cooler unit (7) and said vehicle floor (10).

7. Structure according to Claim 4,
**characterised in that** in addition to said resilient supporting elements (9c to 9e) associated with said vehicle floor (10), further fastening elements (9a and 9b) are provided that are laterally disposed between said compressor (1) and a vehicle wall (15) or at least one vertical fastening support.

8. Structure according to any of the preceding Claims,
**characterised in that** said compressor (1) is provided with laterally accessible maintenance components so as to permit the execution of maintenance work required inside the vehicle, with the upright arrangement of said compressor (1), from the side, without disassembly of said compressor (1).

9. Structure according to any of the preceding Claims,
**characterised in that** said compressor (1) consists substantially of a driving unit (3) as well as of a compression unit (2) configured in the manner of a piston compressor or a screw-type compressor, with the axis of rotation of said driving unit (3) extending in parallel with or coaxially to the axis of rotation of said compression unit (2) for constituting the principal axis of rotation (13) of said compressor (1).

10. Structure according to Claim 9,
**characterised in that** when said compression unit (2) is configured as a piston compressor a plurality of individual cylinders (5a to 5e) are disposed in opposition on said housing (4) so that the pistons located in said cylinders (5a to 5e) will move in one plane.

11. Structure according to any of the preceding Claims,
**characterised in that** said compressor (1) is fastened on said vehicle floor (10) via a fastening support arranged therebetween.

## Revendications

1. Arrangement d'un compresseur (1) à piston sec sur un véhicule, en particulier sur un véhicule ferroviaire, à engendrer de l'air comprimé pour des unités pneumatiques affectées au véhicule, dans lequel l'axe principal de révolution (13) dudit compresseur (1) est disposé en une position essentiellement verticale relative au fond (10) du véhicule, audit compresseur (1) étant fixé, au moins au côté frontal, audit fond de véhicule, et à une unité de refroidissement (7) étant disposée à une position adjacente audit fond de véhicule et également au côté frontal,
**caractérisé en ce que** ladite unité de refroidissement (7) coopère pour l'aspiration de l'air refroidissant via au moins un passage (14) dans ledit fond de véhicule (10), qui mène à l'extérieur.

2. Arrangement selon la revendication 1,
**caractérisé en ce que** ledit compresseur (1) est disposé en une position verticale sur ledit fond de véhicule (10) à l'intérieur du véhicule.

3. Arrangement selon la revendication 1 ou 2,
**caractérisé en ce qu'**en vertu de l'effet de courant d'aspiration d'un dispositif d'évacuation au-dessus dudit compresseur (1), l'air de refroidissement de ladite unité de refroidissement (7) s'écoule le long dudit compresseur (1) d'une façon d'un effet de tirage de cheminée.

4. Arrangement selon la revendication 1,
**caractérisé en ce que** ledit compresseur (1) est fixé audit fond de véhicule (10) via une pluralité des éléments élastiques d'appui (9).

5. Arrangement selon la revendication 4,
**caractérisé en ce que** lesdits éléments élastiques d'appui (9) sont disposés entre le carter (4) d'une unité de compression (2) et ledit fond de véhicule (10).

6. Arrangement selon la revendication 4,
**caractérisé en ce que** lesdits éléments élastiques d'appui (9) sont disposés entre ladite unité de refroidissement (7) et ledit fond de véhicule (10).

7. Arrangement selon la revendication 4,
**caractérisé en ce qu'**au surplus desdits éléments élastiques d'appui (9c à 9e) affectés audit fond de véhicule (10), des éléments fixateurs supplémentaires (9a et 9b) sont montés, qui sont disposés du côté entre ledit compresseur (1) et une paroi du véhicule (15) ou au moins un support vertical de montage.

8. Arrangement selon une quelconque des revendications précédentes,
**caractérisé en ce que** ledit compresseur (1) est muni des composants d'entretien, accessibles du côté, afin de permettre des travaux requis de maintien à l'intérieur du véhicule, à un arrangement vertical dudit compresseur (1 ), du côté, sans démontage dudit compresseur (1).

9. Arrangement selon une quelconque des revendications précédentes,
**caractérisé en ce que** ledit compresseur (1) est essentiellement constitué par une unité motrice (3) ainsi que par une unité de compression (2) configurée de la façon d'un compresseur à piston ou d'un compresseur à vis, à l'axe de révolution des ladite unité motrice (3) s'étendant en parallèle ou coaxialement relativement à l'axe de révolution de ladite unité de compression (2) de façon à constituer l'axe principal de révolution (13) dudit compresseur (1).

10. Arrangement selon la revendication 9,
**caractérisé en ce que** quand ladite unité de compression (2) est configurée en tant qu'un compresseur à piston, une pluralité de cylindres individuels (5a à 5e) sont disposés en position opposée audit carter (4) d'une telle manière, que les pistons, qui se trouvent dans lesdits cylindres (5a to 5e) subissent un mouvement dans le même plan.

11. Arrangement selon une quelconque des revendications précédentes,
**caractérisé en ce que** ledit compresseur (1) est fixé audit fond de véhicule (10) via un support de montage disposé y entre.
